# EUROPEAN PATENT APPLICATION

(11) **EP 1 718 029 A1**
(43) Date of publication of application: **02.11.2006**
(21) Application number: 06252257.8
(22) Date of filing: 27.04.2006
(51) Int. Cl.: H04L 29/06, H04L 29/12

(54) **Method and servers for managing address information of SIP sessions**

(30) Priority: 29.04.2005 KR 20050036281
(71) Applicant: Samsung Electronics Co., Ltd., Suwon-si, Gyeonggi-Do (KR)
(72) Inventor: Son,Kyoung-ho 553-1506 Shinnamushil 5-danji Apt., Gyeonggi-do (KR); Yook, Hyun-gyoo, Seocho-gu, Seoul (KR)
(74) Representative: Brandon, Paul Laurence

(57) **Abstract**

A method and servers are provided for managing address information of a user of a session initiation protocol (SIP) terminal. The method includes receiving a registration request message requesting registration of individual address information from a communication terminal (10); determining whether a user of the communication terminal is a registered user using predetermined authentication information; and storing the individual address information, information indicating whether to permit disclosure of the individual address information, and information indicating an application using the individual address information to cause the individual address information, the information indicating whether to permit disclosure of the individual address information and the information indicating an application using the individual address information to correspond to the authentication information, if the user of the communication terminal is a registered user.

## Description

The present invention relates to methods and servers for managing address information.

The development of communication devices has led to the widespread use of wireless mobile terminals and enables users to enjoy communication services freely irrespective of what time it is and where the user is situated. While a public switching telephone network (PSTN) provides a voice-based communication service, the Internet forms a global network based on data communication services.

A technique for providing integration of voice communication and data communication through the Internet has been recently developed. For example, session initiation protocol (SIP) is a protocol related to session initiation, request, response, and termination between communicating terminals in communication network and can simultaneously provide voice services and data services. In recent years, there have been attempts to spread an SIP-based VoIP service.

According to SIP, users have representative address information that represents individual address information such as their e-mail address, fax number, and cellular phone number. Thus, if a user of an SIP terminal knows representative address information of another party, the user can communicate with the other party using a desired application without knowing the other party's individual address information.

The range of applications of SIP has expanded due to various advantages of communication techniques using SIP and studies have been conducted to strengthen the security of SIP.

For example, Korean Patent Publication No. 2003-0029805 discloses a technique for performing general-purpose mobile communication system authentication using SIP messages where a user is authenticated through an SIP message using a universal mobile telecommunications system authentication and key agreement (UMTSAKA) mechanism.

Conventional techniques including the technique disclosed in Korean Patent Publication No. 2003-0029805 focus on protection of sessions for communication between SIP terminals.

However, according to SIP, a communication terminal (hereinafter, referred to as a user agent server (UAS)) responding to a communication terminal (hereinafter, referred to as a user agent client (UAC)) requesting communication connection includes its individual address information in a response message to a communication connection request message. Thus, according to related art, security for messages transmitted between the UAC and the UAS can be maintained, but disclosure of address information of the UAS to the UAC cannot be prevented.

In other words, since the response message of the UAS with respect to the communication connection request message of the UAC includes its address information, the UAC can obtain individual address information of the UAS with any attempt of communication connection. In this case, address information of a user of an SIP service may be revealed to malicious third parties and undesirable consequences such as the receipt of spam mail may result.

Therefore, a technique for maintaining security of address information of an SIP terminal user is required.

Preferred embodiments of the present invention aim to provide the maintenance of security of address information of a user of an SIP terminal.

According to an aspect of the present invention, there is provided a method for managing address information. The method includes receiving a registration request message requesting registration of individual address information from a communication terminal, determining whether a user of the communication terminal is a registered user using predetermined authentication information, and storing individual address information, information indicating whether to permit disclosure of the individual address information, and information indicating an application using the individual address information to cause the individual address information, the information indicating whether to permit disclosure of the individual address information, and the information indicating an application using the individual address information to correspond to the authentication information, if the user of the communication terminal is a registered user.

According to another aspect of the present invention, there is provided a method for managing address information, the method including receiving a connection request message requesting a connection to a second communication terminal from a first communication terminal, transmitting the connection request message to the second communication terminal, if a response message to the connection request message is received from the second communication terminal, replacing individual address information of the second communication terminal included in the response message with a predetermined random number, and transmitting the response message including the predetermined random number to the first communication terminal.

According to still another aspect of the present invention, there is provided a method for managing address information, the method including receiving a search request message requesting a search for individual address information of a second communication terminal from a first communication terminal, searching for the individual address information of the second communication terminal, transmitting a response message including a predetermined number to the first communication terminal in response to the search request message, and transmitting the individual address information and the predetermined number to a proxy server that relays communication between the first communication terminal and the second communication terminal.

According to yet another aspect of the present invention, there is provided a registration server including a communication module which receives a registration request message requesting registration of individual address information from a communication terminal, a user authentication module which determines whether a user of the communication terminal is a registered user using predetermined authentication information, and an address information registration module which stores the individual address information, information indicating whether to permit disclosure of the individual address information, and information indicating an application using the individual address information to cause the individual address information, the information indicating whether to permit disclosure of the individual address information, and the information indicating an application using the individual address information to correspond to the authentication information, if the user of the communication terminal is a registered user.

According to a further aspect of the present invention, there is provided a proxy server including a communication module which performs communication between a first communication terminal and a second communication terminal, a random number generation module which generates a predetermined number, and a proxy module which receives a connection request message requesting a connection to the second communication terminal from the first communication terminal and transmits the connection request message to the second communication terminal, replaces individual address information of the second communication terminal included in the response message with a predetermined random number if a response message to the connection request message is received from the second communication terminal, and transmits the response message including the predetermined random number to the first communication terminal.

According to yet a further aspect of the present invention, there is provided a redirect server including a search module which searches for individual address information of a second communication terminal if a search request message requesting a search for the individual address information of the second communication terminal is received from a first communication terminal, a random number generation module which generates a predetermined random number, and a control module which generates a response message including the generated random number in response to the search request message, transmits the response message to the first communication terminal, and transmits the individual address information and the predetermined number to a proxy server that relays communication between the first communication terminal and the second communication terminal.

Further features of the present invention are set out in the appended claims.

The present invention will become more apparent by describing in detail exemplary embodiments thereof with reference to the attached drawings in which:
FIG. 1 is a schematic view of an address information management system according to an exemplary embodiment of the present invention;
FIG. 2 is a schematic block diagram of a registration server according to an exemplary embodiment of the present invention;
FIG. 3 illustrates a registration request message according to an exemplary embodiment of the present invention;
FIG. 4 illustrates an address information table stored in a location server according to an exemplary embodiment of the present invention;
FIG. 5 is a schematic block diagram of a proxy server according to an exemplary embodiment of the present invention;
FIG. 6 illustrates a connection request message according to an exemplary embodiment of the present invention;
FIG. 7 illustrates a response message to a connection request message according to an exemplary embodiment of the present invention;
FIG. 8 illustrates mapping between random numbers and individual address information according to an exemplary embodiment of the present invention;
FIG. 9 is a schematic block diagram of a redirect server according to an exemplary embodiment of the present invention;
FIG. 10 is a flowchart illustrating a method for managing address information at a registration server according to an exemplary embodiment of the present invention;
FIG. 11 is a flowchart illustrating a method for managing address information at a proxy server according to an exemplary embodiment of the present invention;
FIG. 12 is a flowchart illustrating a method for managing address information at a proxy server according to another exemplary embodiment of the present invention; and
FIG. 13 is a flowchart illustrating a method for managing address information at a redirect server according to an exemplary embodiment of the present invention.

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which exemplary embodiments of this invention are shown.

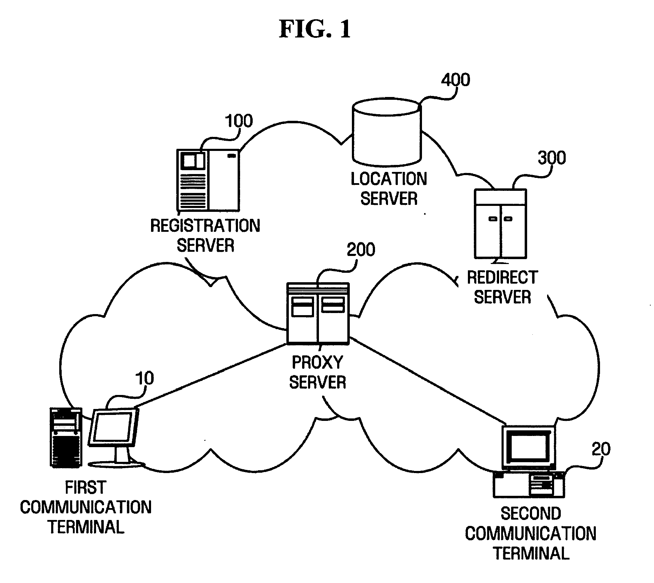

FIG. 1 is a schematic view of an address information management system according to an exemplary embodiment of the present invention.

The address information management system illustrated in FIG. 1 includes a registration server 100, a proxy server 200, a redirect server 300, and a location server 400.

A first communication terminal 10 and a second communication terminal 20 are SIP clients supporting SIP. A user may register or search for address information in the address information management system and communicate with another user using the first communication terminal 10 and the second communication terminal 20. Regarding the first communication terminal 10 and the second communication terminal 20, a terminal requesting communication connection is called a user agent client (UAC) and the other terminal responding to a communication connection request is called a user agent server (UAS). The first communication terminal 10 and the second communication terminal 20 can serve as both a UAC and a UAS. Hereinafter, it is assumed that the first communication terminal 10 serves as a UAC and the second communication terminal 20 serves as a UAS.

The first communication terminal 10 and the second communication terminal 20 can perform Internet communication and can be implemented as desktop computers, notebooks, personal digital assistants (PDA), cellular phones, and so on.

Upon receipt of a message requesting registration of address information (hereinafter, referred to as a registration request message) from the first communication terminal 10 and the second communication terminal 20, the registration server 100 stores the registration-requested address information in the location server 400. At this time, the registration server 100 also stores a disclosure level indicating whether to permit disclosure of address information, together with the address information in the location server 400.

The location server 400 stores address information. In explaining the present invention, the address information can be classified into representative address information and individual address information. The individual address information means address information corresponding to an application of a user's communication terminal and may be a fax number, an e-mail address, and a cellular phone number. On the other hand, the representative address information represents a user's individual address information and is a kind of virtual address. The UAC 10 can request communication using representative address information of the UAS 20 without knowing individual address information of the UAS 20.

The proxy server 200 relays communication between the UAC 10 and the UAS 20. Once the UAC 10 transmits a message requesting communication connection (hereinafter, referred to as a connection request message) to perform communication with the UAS 20, the proxy server 200 receives the connection request message. The proxy server 200 searches for individual address information of the UAS 20 in the address information stored in the location server 400, using representative address information of a user of the UAS 20 and application information indicating an application used by the UAS 20, which are included in the connection request message.

Once the individual address information of the UAS 20 is found, the proxy server 200 transmits the connection request message to the UAS 20 using the individual address information which is found. At this time, the proxy server 200 generates a random number according to a predetermined condition and maps the individual address information of the UAS 20 to the generated random number.

Upon receipt of a response message to the connection request message from the UAS 20, the proxy server 200 replaces the individual address information of the UAS 20 included in the response message with the mapped random number and transmits the response message where the individual address information of the UAS 20 is replaced with the random number to the UAC 10. Thus, the UAC 10 cannot know the individual address information of the UAS 20 even if it receives the response message from the UAS 20.

Upon receipt of a connection request message where a random number is designated as a destination address from the UAC 10, the proxy server 200 searches for individual address information mapped to the random number included in the connection request message. Once the individual address information is found, the proxy server 200 transmits the connection request message to the UAS 20 using the found individual address information.

At this time, it may be preferable that a communication connection request using a random number be permitted only once. Thus, when the proxy server 200 relays a connection request message using a random number to the UAS 20, the proxy server 200 can deactivate a random number mapped to the individual address information of the UAS 20 upon termination of communication between the UAC 10 and the UAS 20. In this case, even when the UAC 10 transmits a connection request message using the same random number, the proxy server 200 does not relay the connection request message to the UAS 20.

Upon receipt of a message requesting a search for the individual address information of the UAS 20 (hereinafter, referred to as a search request message) from the UAC 10, the redirect server 300 searches for the individual address information of the UAS 20 in the location server 400 and transmits a response message including the found individual address information to the UAC 10. The search request message may include representative address information of the user of the UAS 20 and application information indicating an application used by the UAS 20 and the redirect server 300 may search in the location server 400 for individual address information corresponding to the representative information and the application information which are included in the search request message.

According to an exemplary embodiment, the redirect server 300 generates a random number according to a predetermined condition and transmits a response message including the generated random number instead of the found individual address information of the UAS 20 to the UAC 10. In this case, the UAC 10 cannot know the individual address information of the UAS 20 even when receiving the response message to the search request message. When the UAC 10 transmits a connection request message for communication with the UAS 20, the UAC 10 designates a random number included in the response message of the redirect server 300 as a destination address.

The redirect server 300 transmits the generated random number and the found individual address information of the UAS 20 to the proxy server 200. When the proxy server 200 receives a connection request message where a random number is designated as a destination address from the UAC 10, the proxy server 200 transmits the connection request message to the UAS 20 using the individual address information mapped to the random number.

In this case, it may also be preferable that a communication connection request using a random number be permitted only once. Thus, when the proxy server 200 relays the connection request message using a random number to the UAS 20, it can deactivate the random number mapped to the individual address information of the UAS 20 upon termination of communication between the UAC 10 and the UAS 20.

Although the registration server 100, the proxy server 200, the redirect server 300, and the location server 400 forming the address information management system have been described above as independent units, some of the registration server 100, the proxy server 200, the redirect server 300, and the location server 400 may be integrated. For example, an address information registration function of the registration server 100 may be integrated into the proxy server 200 and the proxy server 200 may implement an address information registration function and a communication relay function between communication terminals. Thus, when functions of servers are integrated, some of the functional blocks of the servers implementing similar functions may be integrated into one block. When a plurality of servers is integrated, blocks for organic connection between the functional blocks of the servers may be added.

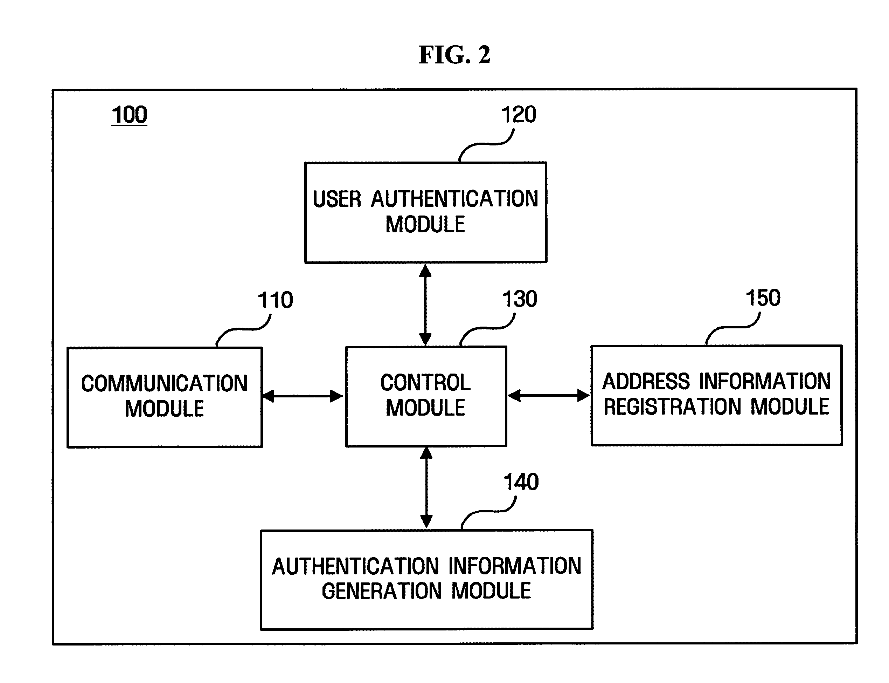

Hereinafter, the registration server 100, the proxy server 200, and the redirect server 300 will be described in more detail with reference to FIGS. 2 through 9.
FIG. 2 is a schematic block diagram of a registration server according to an exemplary embodiment of the present invention. In the illustrative embodiment, the registration server 100 receiving a registration request message from the UAC 10 will be described in the current exemplary embodiment of the present invention illustrated in FIG. 2, but the same description can also be applied to the registration server 100 receiving a registration request message from the UAS 20.

The registration server 100 includes a communication module 110, a user authentication module 120, a control module 130, an authentication information generation module 140, and an address information registration module 150.
The communication module 110 performs communication with other devices using a wired or wireless medium and the registration server 100 can perform Internet communication through the communication module 110. Given the function and communication processing rate of the registration server 100, it may be preferable that the communication module 110 use a wired medium.

The communication module 110 receives the registration request message from the UAC 10 and transmits a response message generated by the control module 130.

The user authentication module 120 determines whether a user of the UAC 10 requesting address registration is a registered user. To this end, the user authentication module 120 may check authentication information included in the registration request message.

The registration request message may be implemented as an SIP request message (more specifically, a REGISTER request message of SIP).

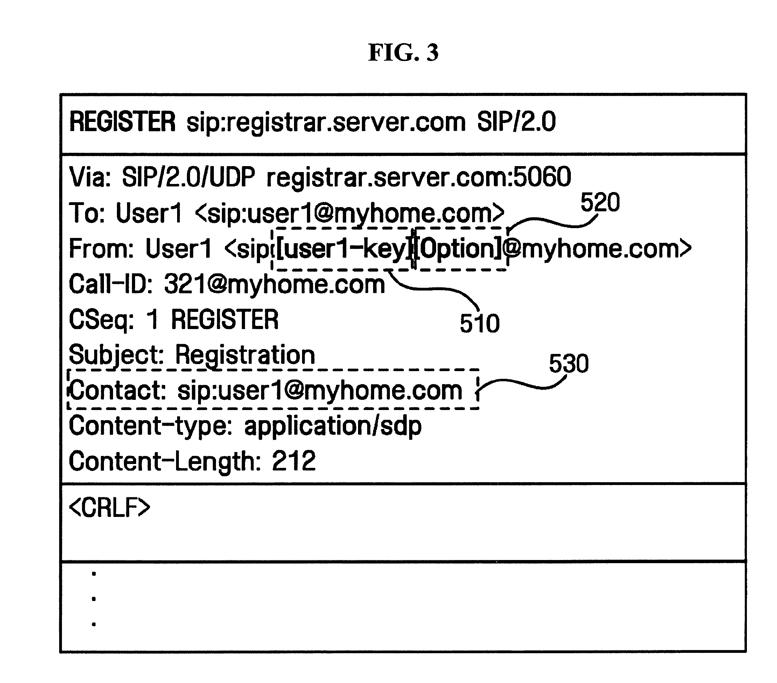

A registration request message according to an exemplary embodiment of the present invention is illustrated in FIG. 3. The registration request message includes a user key value 510 in a 'From' header as an authentication information for identifying a user. The user authentication module 120 can determine whether the user requesting address registration is a registered user by checking the user key value 510. For example, where there is no user key value 510 or the user key value 510 does not correspond to individual address information 530 of the UAC 10 set in a 'Contact' header, the user authentication module 120 may determine that the user of the UAC 10 is not a registered user. Correspondence between the user key value 510 and the individual address information 530 can be checked based on an address information table stored in the location server 400.

The control module 130 controls operations of functional blocks of the registration server 100. The control module 130 interprets the registration request message received by the communication module 110 and generates a response message to the registration request message.

The authentication information generation module 140 generates a user key value corresponding to the user of the UAC 10 if the user authentication module 120 determines that the user of the UAC 10 is not a registered user. The user key value is a unique value. The user key value generated by the authentication information module 140 is transmitted to the UAC 10 after being included in the response message generated by the control module 130 and the user of the UAC 10 uses the user key value transmitted in the response message as its authentication information.

The address information registration module 150 stores address information of the UAC 10 included in the registration request message in the location server 400. More specifically, the address information registration module 150 stores individual address information, a disclosure level indicating whether to permit disclosure of the individual address information, and application information indicating an application using the individual address information which are included in the address information registration request message. If the authentication information generation module 140 generates a user key value, the address information registration module 150 also stores the user key value as the user's authentication information in the location server 400.

The user of the UAC 10 may select whether to permit disclosure of individual address information to be registered and the UAC 10 generates the registration request message including the individual address information to be registered, the disclosure level of the individual address information, and information of application using the individual address information. The information can be set in an 'Option' item 520 of a 'From' header of the registration request message illustrated in FIG. 3 and the address information registration module 150 may obtain information to be stored in the location server 400 using the information set in the 'Option' item 520.

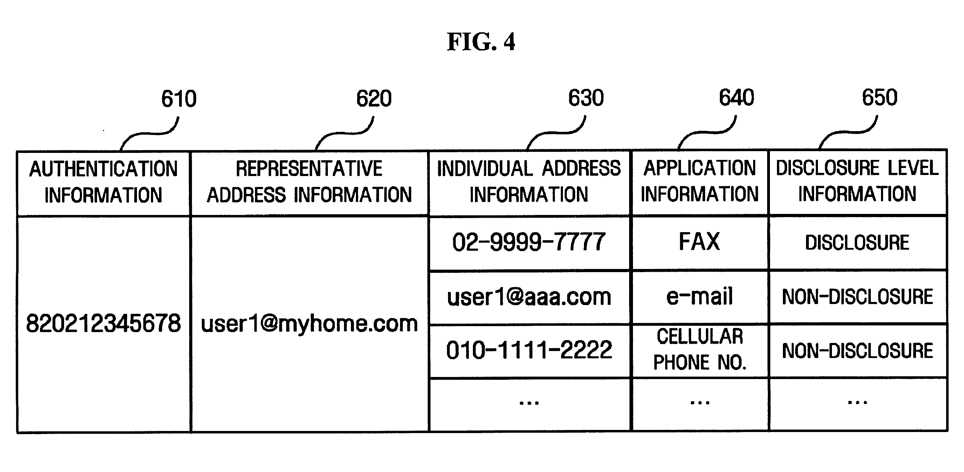

An address information table stored in the location server 400 by the address information registration module 150 according to an exemplary embodiment of the present invention is illustrated in FIG. 4.

The address information table includes authentication information 610 for identifying a registered user, a user's representative address information 620, a user's individual address information 630, information of application 640 using the individual address information 620, and disclosure level information 650 of the individual address information 630. Thus, the address information registration module 150 stores individual address information in an address information table having the same authentication information as that included in the registration request message. If the authentication information generation module 140 generates a user key value, the address information registration module 150 generates a new address information table using the generated user key value as authentication information and stores individual address information in the generated address information table.

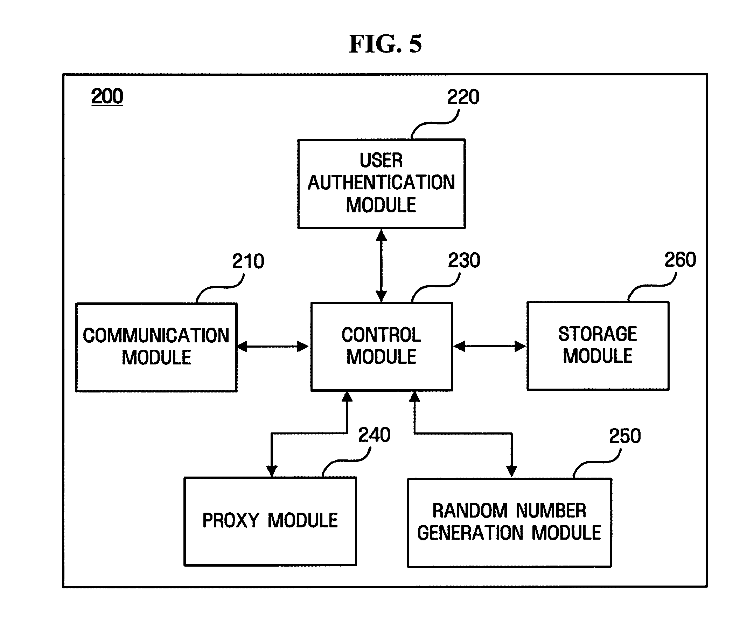

FIG. 5 is a schematic block diagram of a proxy server 200 according to an exemplary embodiment of the present invention.
Referring to FIG. 5, the proxy server 200 includes a communication module 210, a user authentication module 220, a control module 230, a proxy module 240, a random number generation module 250, and a storage module 260.

The communication module 210 performs communication with other devices using a wired or wireless medium and the proxy server 200 can perform Internet communication through the communication module 210. Given the function and communication processing rate of the proxy server 200, it may be preferable that the communication module 210 use a wired medium.

The communication module 210 receives a connection request message from the UAC 10 and transmits the same to the UAS 20. The communication module 210 also receives a response message from the UAS 20 and transmits the same to the UAC 10.

The user authentication module 220 determines whether the user of the UAC 10 transmitting the connection request message is a registered user. To this end, the user authentication module 220 may check authentication information included in the connection request message.

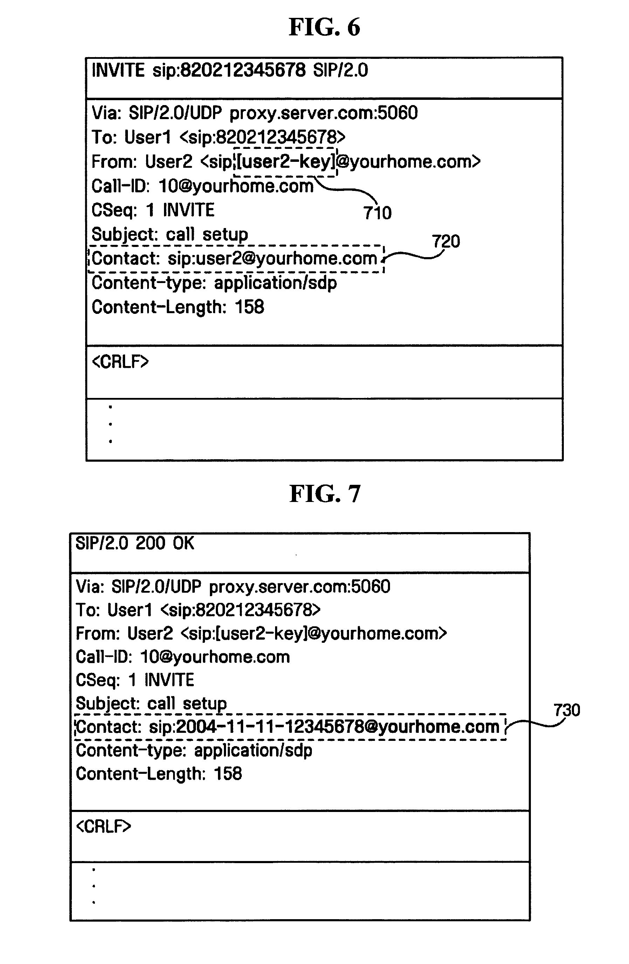

The connection request message may be implemented as an SIP request message (more specifically, an INVITE request message of SIP) and the connection request message according to an exemplary embodiment of the present invention is illustrated in FIG. 6.
The user authentication module 220 determines whether the user of the UAC 10 is a registered user by checking whether authentication information 710 included in a 'From' header included in the connection request message corresponds to individual address information 720 of the UAC 10 set in a 'Contact' header. For example, when there is no authentication information 710 or the authentication information 710 does not correspond to the individual address information 720 of the UAC 10 set in the 'Contact' header, the user authentication module 220 may determine that the user of the UAC 10 is not a registered user. Correspondence between the authentication information 710 and the individual address information 730 can be checked based on an address information table stored in the location server 400.

The control module 230 controls operations of functional blocks of the proxy server 200. The control module 230 also interprets the connection request message received by the communication module 210.

If the user authentication module 220 determines that the user of the UAC 10 is not a registered user, the control module 230 may generate a response message rejecting a connection request and transmit the response message to the UAC 10 through the communication module 210. When a communication reject request is received from the UAS 20 through the communication module 210 to reject communication with the UAC 10, the control module 230 can map the individual address information of the UAC 10 with the individual address information of the UAS 20. Thus, upon receipt of the connection request message from the UAC 10 requesting communication with the UAS 20, the control module 230 may generate a response message rejecting a connection request and transmit the response message to the UAC 10 through the communication module 210. Once the connection request is rejected, the control module 230 controls the proxy module 240 to prevent the connection request message of the UAC 10 from being transmitted to the UAS 20.

The control module 230 maps individual address information found by the user authentication module 220 to a random number generated by the random number generation module 250 and stores the individual address information and the random number in the storage module 260. When the communication module 210 receives a random number and individual address information mapped thereto from the redirect server 300, the control module 230 stores the random number and the individual address information mapped thereto in the storage module 260.

The proxy module 240 relays communication between the UAC 10 and the UAS 20. When the communication module 210 receives a connection request message from the UAC 10 requesting communication between the UAC 10 and the UAS 20, the proxy module 240 searches in the location server 400 for individual address information corresponding to representative address information or authentication information included in the connection request message. Once the individual address information is found, the proxy module 240 transmits the connection request message to the UAS 20 using the found individual address information. When the individual address information is found, the proxy module 240 may check the disclosure level of the found individual address information. When the disclosure level of the found individual address information is set to "Non-disclosure", the proxy module 240 requests the random number generation module 250 to generate a random number.

Once the communication module 210 receives a response message to the connection request message from the UAS 20, the proxy module 240 replaces the individual address information of the UAS 20 included in the response message with the random number generated by the random number generation module 250. The proxy module 240 then transmits the response message to the UAC 10 through the communication module 210.

The response message in which the individual address information is replaced with a random number by the proxy module 240 is illustrated in FIG. 7. As illustrated in FIG. 7, a 'Contact' header of the response message includes a random number 730 instead of the individual address information of the UAS 20. Thus, the user of the UAC 10 cannot know actual individual address information of the UAS 20 even when the UAC 10 receives the response message to the connection request message.

When the communication module 210 receives the connection request message in which a random number is designated as a destination address corresponding to the UAC 20, the proxy module 240 searches in the storage module 260 for individual address information mapped to the random number included in the connection request message. Once the individual address information is found, the proxy module 240 transmits the connection request message to the UAS 20 using the found individual address information.

The random number generation module 250 generates a random number. The random number may be a sequence of numbers or characters, or a combination thereof. Preferably, but not necessarily, the random number may be a combination of the time the communication module 210 receives the connection request message and the individual address information of the UAC 10 transmitting the connection request message. For example, if the connection request message is received at 9:10 am on April 1, 2005, and the individual address information of the UAC 10 transmitting the connection request message is 'user1@myhome.net', the random number generation module 250 may generate a random number '2005-04-01-09-10-user1@myhome.net'. The random number may be generated at the request of the proxy module 240.

The storage module 260 stores a random number and individual address information mapped thereto. The random number and the individual address information mapped thereto, which are stored by the storage module 260, may be the random number generated by the random number generation module 250 and the individual address information found by the proxy module 240. The random number and the individual address information mapped thereto, which are stored by the storage module 260, may be transmitted from the redirect server 300.

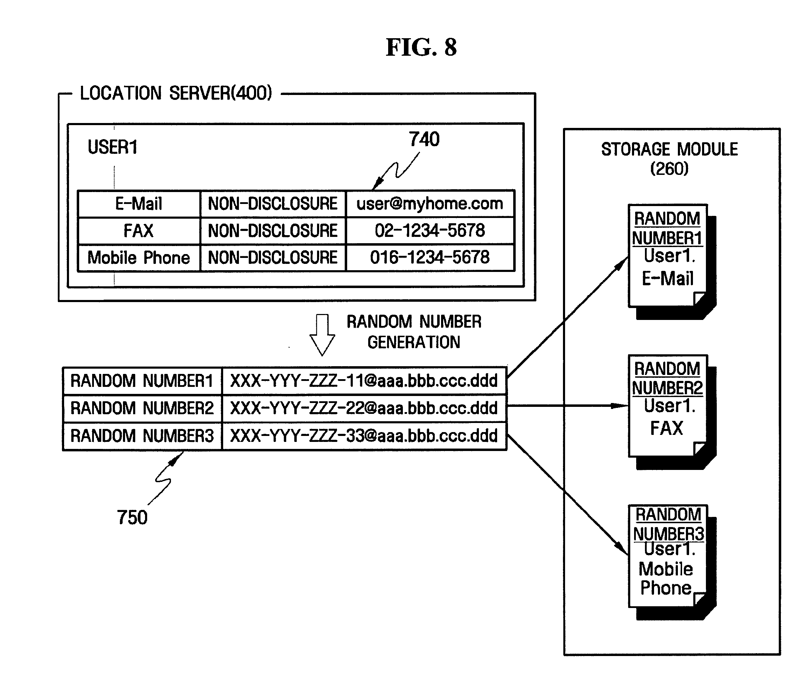

An example of the random number and the individual address information mapped thereto, which are stored in the storage module 260, is illustrated in FIG. 8. As illustrated in FIG. 8, a user's individual address information 740 stored in the location server 400 and a random number 750 generated by the random number generation module 250 may be stored in the storage module 260 while being one-to-one mapped.

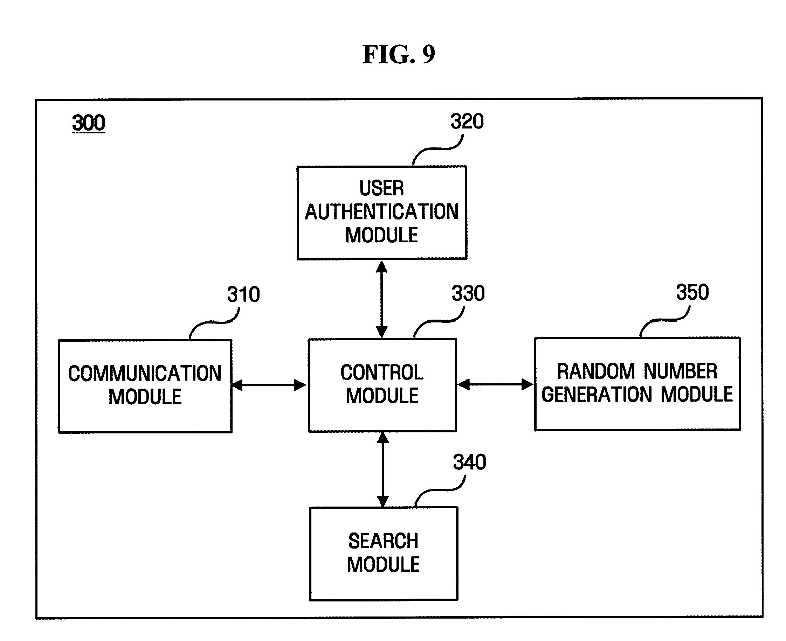

FIG. 9 is a schematic block diagram of a redirect server 300 according to an exemplary embodiment of the present invention.

Referring to FIG. 9, the redirect server 300 includes a communication module 310, a user authentication module 320, a control module 330, a search module 340, and a random number generation module 350.

The communication module 310 performs communication with other devices using a wired or wireless medium and the redirect server 300 can perform Internet communication through the communication module 310. Given the function and communication processing rate of the redirect server 300, it may be preferable that the communication module 310 use a wired medium.

The communication module 310 receives a search request message from the UAC 10 and transmits a response message to the UAC 10.

The user authentication module 320 determines whether a user of the UAC 10 transmitting the search request message is a registered user. To this end, the user authentication module 320 may check authentication information included in the search request message.

The search request message according to an exemplary embodiment of the present invention may be understood by analogy with the connection request message described with reference to FIG. 6. Thus, if the message illustrated in FIG. 6 is a search request message, it can be determined whether the user of the UAC 10 is a registered user by checking whether the authentication information 710 included in the search request message corresponds to the individual address information 720 of the UAC 10. For example, when there is no authentication information 710 or the authentication information 710 does not correspond to the individual address information 720 of the UAC 10 set in the 'Contact' header, the user authentication module 320 may determine that the user of the UAC 10 is not a registered user. Correspondence between the authentication information 710 and the individual address information 730 can be checked based on an address information table stored in the location server 400.

The control module 330 controls functional blocks of the redirect server 300. The control module 330 also interprets the search request message received by the communication module 330 and generates a response message to the search request message.

When the user authentication module 320 determines that the user of the UAC 10 is not a registered user, the control module 330 may generate a response message rejecting a search request. In this case, the control module 330 may control the search module 340 not to perform a search process in response to the receipt of the search request message.

The control module 330 maps individual address information found by the search module 340 and a random number generated by the random number generation module 350 and transmits them to the proxy server 200 through the communication module 310. The control module 330 also replaces the individual address information found by the search module 340 with the random number generated by the random number generation module 350 in the response message to the search request message.

When the communication module 310 receives the search request message, the search module 340 searches in the location server 400 for individual address information corresponding to representative address information or authentication information of the user of the UAS 20 included in the search request message. At this time, the search module 340 can check the disclosure level of the found individual address information. If the disclosure level of the found individual address information is set to "Non-disclosure", the search module 220 requests the random number generation module 350 to generate a random number.

The random number generation module 350 generates a random number. The random number may be a sequence of numbers or characters, or a combination thereof. Preferably, but not necessarily, the random number may be a combination of the time the communication module 310 receives the search request message and the individual address information of the UAC 10 transmitting the search request message. For example, if the search request message is received at 9:10 am on April 1, 2005, and the individual address information of the UAC 10 transmitting the search request message is 'user1@myhome.net', the random number generation module 350 may generate a random number '2005-04-01-09-10-user1@myhome.net'. The random number may be generated at the request of the search module 340.

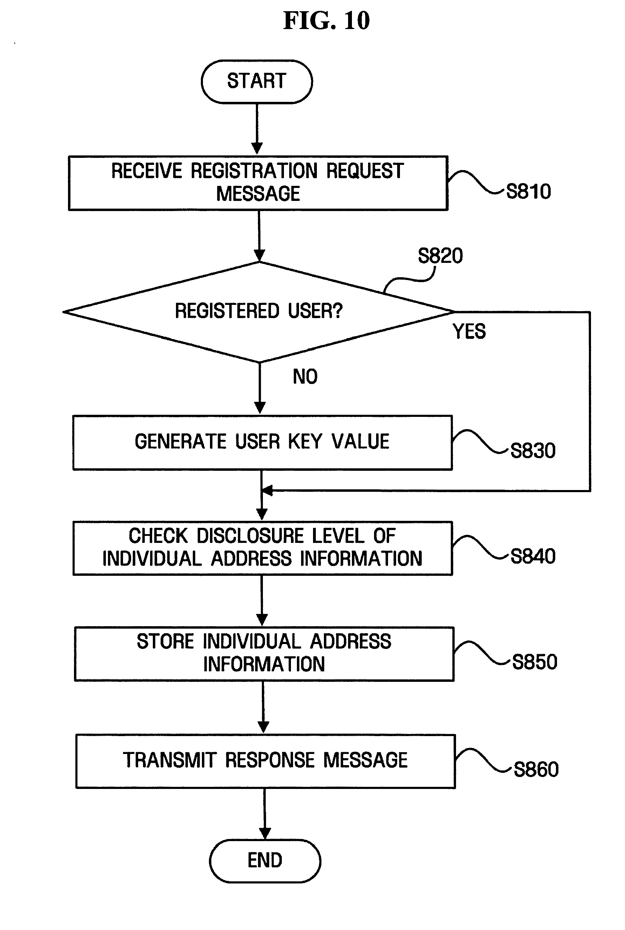

Hereinafter, operations of functional blocks of the registration server 100, the proxy server 200, and the redirect server 300 will be described in more detail with reference to FIGS. 10 through 13.

FIG. 10 is a flowchart illustrating a method for managing address information at a registration server according to an exemplary embodiment of the present invention.

Referring to FIG. 10, if the communication module 110 receives a registration request message in operation S810, the user authentication module 120 determines whether a user of the UAC 10 transmitting the registration request message is a registered user based on authentication information included in the registration request message in operation S820.

If the user authentication module 120 determines that the user of the UAC 10 is not a registered user, the authentication information generation module 140 generates a user key value corresponding to the user in operation S830.

The address information registration module 150 checks the disclosure level of individual address information to be registered based on information included in the registration request message in operation S840 and stores the individual address information in the location server 400 in operation S850. At this time, the individual address information is stored to correspond to authentication information set as the user key value generated by the authentication information generation module 140. Application information indicating an application using the individual address information and the disclosure level of the individual address information may also be stored.

If the user authentication module 120 determines that the user of the UAC 10 is a registered user in operation S820, the individual address information is stored to the location server 400 to correspond to authentication information of the user of the UAC 10 in operation S850. In other words, the individual address information may be stored in an address information table having the same authentication information as that included in the registration request message among address information tables stored in the location server 400.

Once the individual address information is stored, the control module 130 generates a response message in response to the registration request message and transmits the response message to the UAC 10 through the communication module 110 in operation S860.

If the authentication information generation module 140 generates a user key value, the control module 130 generates the response message including the generated user key value. Thus, the user of the UAC 10 receiving the response message uses the user key value received from the registration server 100 as its authentication information when registering further individual address information.

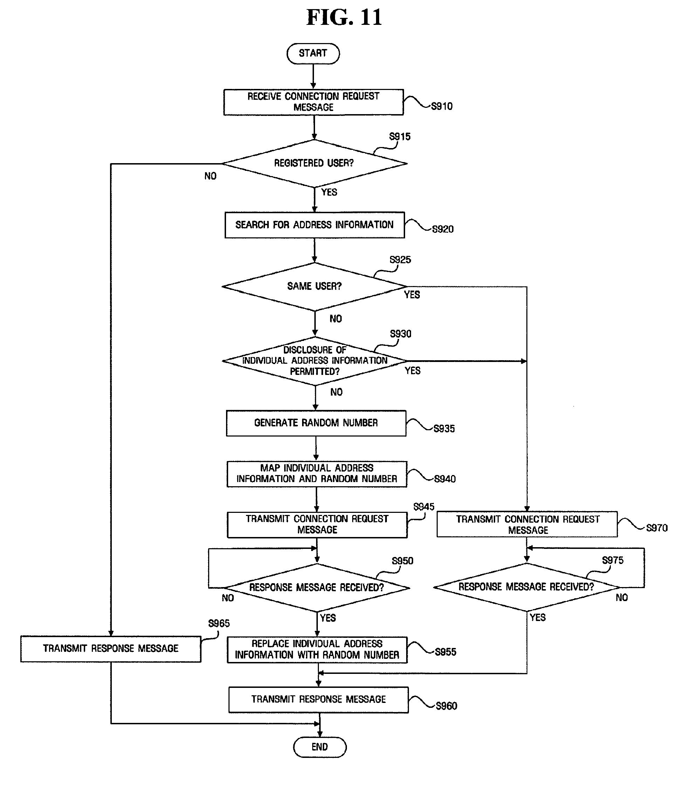

FIG. 11 is a flowchart illustrating a method for managing address information at a proxy server according to an exemplary embodiment of the present invention.

Referring to FIG. 11, if the communication module 210 receives a connection request message from the UAC 10 in operation S910, the user authentication module 220 determines whether the user of the UAC 10 transmitting the connection request message is a registered user based on authentication information included in the connection request message in operation S915.

If the user authentication module 220 determines that the user of the UAC 10 is not a registered user, the control module 230 generates a response message rejecting a connection request and transmits the response message to the UAC 10 through the communication module 210 in operation S965.

If the user authentication module 220 determines that the user of the UAC 10 is a registered user, the proxy module 240 searches in the location server 400 for individual address information of the UAS 20 in operation S920.
At this time, the proxy module 240 determines whether the user of the UAC 10 is the same as the user of the UAS 20 in operation S925 by comparing the authentication information included in the connection request message and authentication information corresponding to the individual address information found in the location server 400.

If the proxy module 240 determines that the user of the UAC 10 and the user of the UAS 20 are the same, the proxy module 240 transmits the connection request message to the UAS 20 through the communication module 210 in operation S970. Thereafter, when the communication module 210 receives a response message to the connection request message from the UAS 20 in operation S975, the proxy module 240 transmits the response message to the UAC 10 through the communication module 210 in operation S960.

However, if it is determined that the user of the UAC 10 and the user of the UAS 20 are not the same in operation S925, the proxy module 240 determines whether to permit disclosure of the found individual address information by checking the disclosure level of the found individual address information in operation S930. If it is determined that disclosure of the found individual address information is permitted, the proxy module 240 transmits the connection request message to the UAS 20 using the found individual address information in operation S970. Thereafter, if a response message to the connection request message is received from the UAS 20 in operation S975, the proxy module 240 transmits the response message to the UAC 10 through the communication module 210 in operation S960.

If it is determined that disclosure of the found individual address information is not permitted, the random number generation module 250 generates a random number in operation S935. The control module 230 maps the random number generated by the random number generation module 250 to the individual address information found by the proxy module 240 in operation S940. The random number and the individual address information mapped thereto may be stored in the storage module 260.

The proxy module 240 transmits the connection request message to the UAS 20 using the found individual address information through the communication module 210 in operation S945.

If a response message is received from the UAS 20 in operation S950, the proxy module 240 replaces individual address information of the UAS 20 included in the received response message with a random number in operation S955.

The proxy module 240 then transmits the response message in which the individual address information is replaced with the random number to the UAC 10 through the communication module 210 in operation S960.

Operations S925 and S930 may be omitted. Thus, generating a random number in operation S935 may be performed after searching for individual address information in operation S920 or only one of operations S935 and S920 may be performed.

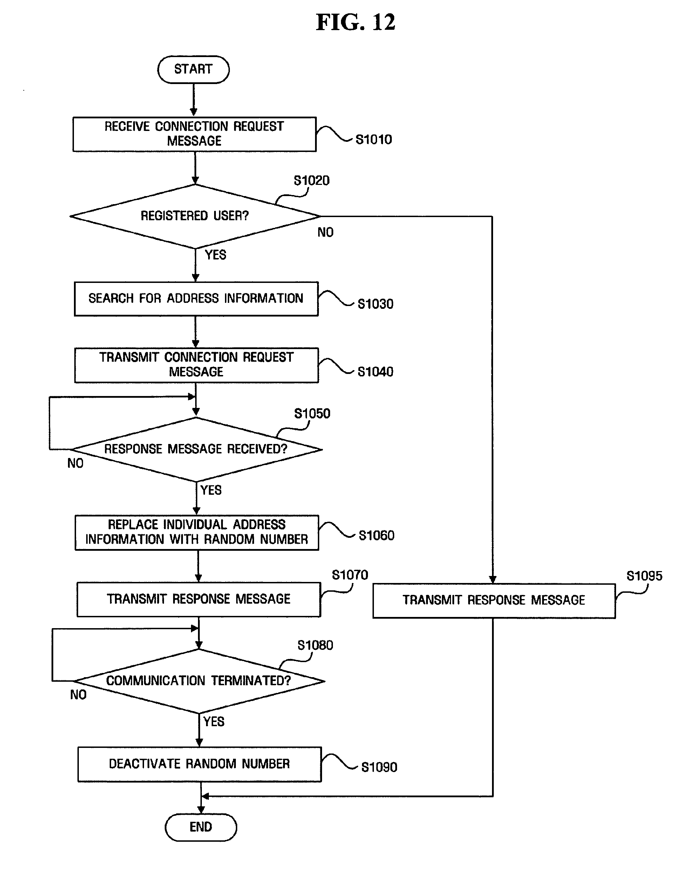

FIG. 12 is a flowchart illustrating a method for managing address information at a proxy server according to another exemplary embodiment of the present invention.

Referring to FIG. 12, if the communication module 210 receives a connection request message from the UAC 10 in operation S1010, the user authentication module 220 determines whether a user of the UAC 10 transmitting the connection request message is a registered user based on authentication information included in the connection request message in operation S1020.

If the user authentication module 220 determines that the user of the UAC 10 transmitting the connection request message is not a registered user, the control module 230 generates a response message rejecting a connection request and transmits the response message to the UAC 10 through the communication module 210 in operation S1095.

If the user authentication module 220 determines that the user of the UAC 10 transmitting the connection request message is a registered user, the proxy module 240 searches for individual address information of the UAS 20 in operation S1030. If address information of the UAS 20 is set as a random number in the connection request message, the proxy module 240 searches in the storage module 260 for individual address information mapped to the random number. Thus, according to an exemplary embodiment of the present invention, when the connection request message is received, the proxy module 240 may also determine whether the destination address of the connection request message is set as a random number.

The proxy module 240 transmits the connection request message to the UAS 20 using the found address information in operation S1040.

If the response message is received from the UAS 20 in operation S1050, the proxy module 240 replaces the individual address information of the UAS 20 included in the received response message with a random number in operation S1060. The random number used at this time may be a random number set as a destination address in the initial connection request message or a new random number generated by the random number generation module 250.

The proxy module 240 transmits the response message in which the individual address information is replaced with the random number to the UAC 10 through the communication module 210 in operation S1070.

Since it may be preferable that a communication connection request using a random number be permitted only once, the control module 230 determines whether communication between the UAC 10 and the UAS 20 through the connection request message using a random number is terminated and may deactivate the random number and the individual address information mapped thereto which are included in the connection request message of the UAC 10 in the storage module 260 when communication is terminated in operation S1090.

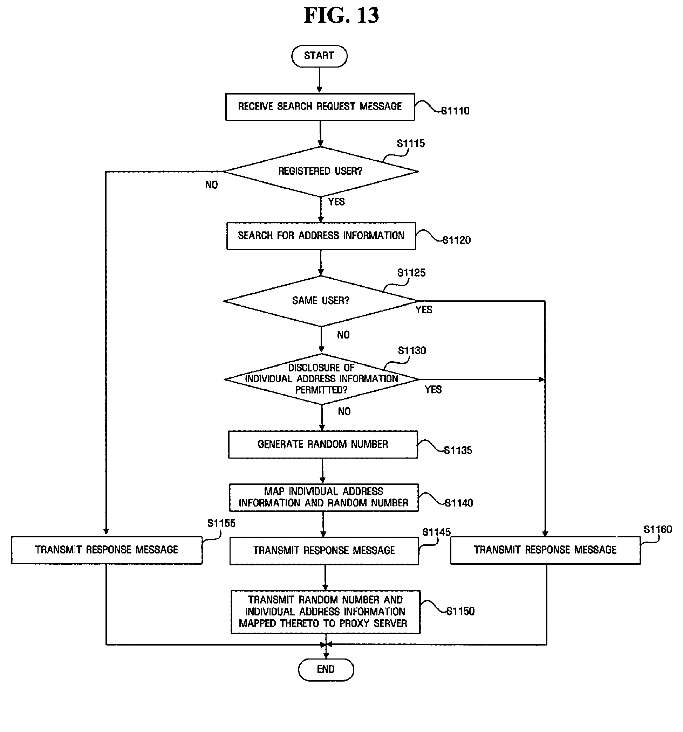

FIG. 13 is a flowchart illustrating a method for managing address information at a redirect server according to an exemplary embodiment of the present invention.

Referring to FIG. 13, once the communication module 310 receives a search request message for searching for individual address information of the UAS 20 from the UAC 10 in operation S1110, the user authentication module 320 determines whether the user of the UAC 10 transmitting the registration request message is a registered user based on authentication information included in the registration request message in operation S 1115.

If it is determined that the user of the UAC 10 transmitting the registration request message is not a registered user, the control module 330 generates a response message rejecting a search request and transmits the response message to the UAC 10 through the communication module 310 in operation S1155.

If the user of the UAC 10 is a registered user, the search module 340 searches in the location server 400 for the individual address information of the UAS 20 in operation S 1120. The search module 340 determines whether the user of the UAC 10 and the user of the UAS 20 are the same in operation S 1125 by comparing authentication information included in the search request message and authentication information corresponding to the individual address information found in the location server 400.

If the search module 340 determines that the user of the UAC 10 and the user of the UAS 20 are the same, the search module 340 transmits a response message including the found individual address information to the UAC 10 in operation S 1160.

However, if the search module 340 determines that the user of the UAC 10 and the user of the UAS 20 are not the same, the search module 340 checks the disclosure level of the found individual address information to determine whether to permit disclosure of the found individual address information in operation S 1130. If the search module 340 determines that disclosure of the found individual address information is permitted, the search module 340 transmits the response message including the found individual address information to the UAC 10 in operation S1160.

However, if the search module 340 determines that disclosure of the found individual address information is not permitted, the random number generation module 350 generates a random number in operation S1135.

The control module 340 maps the found individual address information to the random number generated by the random number generation module 350 in operation S1140. Thereafter, the control module 330 generates a response message in which the found individual address information is replaced with the random number generated by the random number generation module 350 and transmits the response message to the UAC 10 through the communication module 310 in operation S1145.

The control module 330 also transmits the random number generated by the random number generation module 350 and the individual address information mapped thereto to the proxy server 200 through the communication module 310 in operation S1150.
According to preferred embodiments of the present invention, security of address information of an SIP terminal user can be strengthened.

In concluding the detailed description, those skilled in the art will appreciate that many variations and modifications can be made to the exemplary embodiments without substantially departing from the principles of the present invention. Therefore, the disclosed exemplary embodiments of the invention are used in a generic and descriptive sense only and not for purposes of limitation.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for managing address information, the method comprising:
receiving a registration request message requesting registration of individual address information from a communication terminal (10);
determining whether a user of the communication terminal is a registered user based on authentication information; and
storing the individual address information to correspond to the authentication information, if it is determined that the user of the communication terminal is a registered user.

2. The method of claim 1, further comprising storing information indicating whether to permit disclosure of the individual address information and information indicating an application using the individual address information to correspond to the authentication information, if it is determined that the user of the communication terminal is a registered user.

3. The method of claim 2, wherein the registration request message includes the individual address information, the information indicating whether to permit disclosure of the individual address information, and the information indicating the application using the individual address information.

4. The method of claim 2 or claim 3, further comprising:
generating authentication information for identifying the user of the communication terminal if it is determined that the user of the communication terminal is not a registered user; and
transmitting a response message including the generated authentication information to the communication terminal.

5. A method for managing address information, the method comprising:
receiving from a first communication terminal (10) a connection request message requesting a connection to a second communication terminal;
transmitting the connection request message to the second communication terminal (20);
if a response message is received from the second communication terminal in response to the connection request message, replacing individual address information of the second communication terminal included in the response message with a random number, ; and
transmitting the response message including the predetermined random number to the first communication terminal.

6. The method of claim 5, wherein the random number is generated if it is determined that a user of the first communication terminal (10) and a user of the second communication terminal (20) are not the same.

7. The method of claim 5, wherein the random number is generated if a disclosure level of the individual address information of the second communication terminal (20) is set to non-disclosure.

8. The method of claim 5, wherein the random number is generated based on time information indicating when the connection request message was received and individual address information of the first communication terminal (20).

9. The method of any one of claims 5-8, further comprising:
mapping the random number to the individual address information of the second communication terminal (20); and
transmitting the connection request message to the second communication terminal using the individual address information mapped to the predetermined number if the connection request message in which the random number is set as a destination address is received.

10. The method of claim 9, further comprising deactivating the random number mapped to the individual address information of the second communication terminal (20) if communication between the first communication terminal (10) and the second communication terminal is terminated.

11. A method for managing address information, the method comprising:
receiving from a first communication terminal (10) a search request message requesting a search for individual address information of a second communication terminal (20);
searching for the individual address information of the second communication terminal;
transmitting to the first communication terminal a response message which includes a random number in response to the search request message; and
transmitting the individual address information and the random number to a proxy server that relays communication between the first communication terminal and the second communication terminal.

12. The method of claim 11, wherein the random number is generated if it is determined that a user of the first communication terminal (10) and a user of the second communication terminal (20) are not the same.

13. The method of claim 11, wherein the random number is generated if a disclosure level of the individual address information of the second communication terminal (20) is set to non-disclosure.

14. The method of claim 11, wherein the random number is generated based on time information indicating when the search request message was received and individual address information of the first communication terminal (10).

15. A registration server (100) comprising:
a communication module (110) which receives a registration request message requesting registration of individual address information from a communication terminal (10);
a user authentication module (120) which determines whether a user of the communication terminal is a registered user based on authentication information; and
an address information registration module (150) which stores the individual address information to correspond to the authentication information, if it is determined that the user of the communication terminal is a registered user.

16. The registration server (100) of claim 15, wherein the address information registration module (150) further stores information indicating whether to permit disclosure of the individual address information and information indicating an application using the individual address information to correspond to the authentication information, if it is determined that the user of the communication terminal (10) is a registered user

17. The registration server (100) of claim 16, wherein the registration request message includes the individual address information, the information indicating whether to permit disclosure of the individual address information, and the information indicating the an application using the individual address information.

18. The registration server (100) of claim 16, further comprising an authentication information generation module (140) which generates authentication information for identifying the user of the communication terminal (10) if the user of the communication terminal is not a registered user, wherein the communication module transmits a response message including the generated authentication information to the communication terminal.

19. A proxy server (200) comprising:
a communication module (210) which performs communication between a first communication terminal (10) and a second communication terminal (20);
a random number generation module (250) which generates a random number; and
a proxy module (240) which receives a connection request message requesting a connection to the second communication terminal from the first communication terminal, transmits the connection request message to the second communication terminal, replaces individual address information of the second communication terminal included in the response message with the random number if a response message is received from the second communication terminal in response to the connection request message, and transmits the response message including the random number to the first communication terminal.

20. The proxy server (200) of claim 19, wherein the random number is generated if it is determined that a user of the first communication terminal (10) and a user of the second communication terminal (20) are not the same.

21. The proxy server (200) of claim 19, wherein the random number is generated if the disclosure level of the individual address information of the second communication terminal (20) is set to non-disclosure.

22. The proxy server (200) of claim 19, wherein the random number is generated based on time information indicating when the connection request message was received and individual address information of the first communication terminal (10).

23. The proxy server (200) of any one of claims 19-22, further comprising a control module (230) that maps the random number to the individual address information of the second communication terminal (20), wherein the connection request message is transmitted to the second communication terminal using the individual address information mapped to the random number if the connection request message in which the random number is set as a destination address is received.

24. The proxy server (200) of claim 23, wherein the control module (230) deactivates the random number mapped to the individual address information of the second communication terminal (20) if communication between the first communication terminal (10) and the second communication terminal is terminated.

25. A redirect server (300) comprising:
a search module (340) which searches for individual address information of a second communication terminal (20) if a search request message requesting a search for the individual address information of the second communication terminal is received from a first communication terminal (10);
a random number generation module (350) which generates a random number; and
a control module (330) which generates a response message including the random number in response to the search request message, transmits the response message to the first communication terminal, and transmits the individual address information and the random number to a proxy server that relays communication between the first communication terminal and the second communication terminal.

26. The redirect server (300) of claim 25, wherein the random number is generated if it is determined that a user of the first communication terminal (10) and a user of the second communication terminal (20) are not the same.

27. The redirect server (300) of claim 25, wherein the predetermined random number is generated thief a disclosure level of the individual address information of the second communication terminal (20) is set to non-disclosure.

28. The redirect server (300) of claim 25, wherein the random number is generated based on time information indicating when the connection request message was received and individual address information of the first communication terminal (10).
